# EUROPEAN PATENT APPLICATION

(11) **EP 4 821 885 A1**
(43) Date of publication of application: **14.10.2026**
(21) Application number: 25864617.3
(22) Date of filing: 12.06.2025
(51) Int. Cl.: C01C 1/04

(54) **AMMONIA SYNTHESIS REACTOR AND METHOD FOR MANUFACTURING AMMONIA USING SAME**

(30) Priority: 21.02.2025 KR 20250022871
(71) Applicant: Korea Zinc Co., Ltd., Seoul 03159 (KR)
(72) Inventor: CHOI, Heon Sik, Ulsan 44696 (KR); CHOI, Jae Hyung, Busan 48530 (KR); CHOI, Hyun Woo, Ulsan 44676 (KR)
(74) Representative: Angerhausen, Christoph
(86) International application number: PCT/KR2025/008063
(87) International publication number: WO 2026/177267

(57) **Abstract**

The present disclosure provides an ammonia synthesis reactor comprising: a sealed cylindrical main body, an inlet connected to the cylindrical main body, into which a first fluid stream containing hydrogen gas and nitrogen gas is introduced, a shell arranged at a center of the cylindrical main body, a tube bundle accommodated within the shell, an interior of which forms a flow path for the first fluid stream, at least one catalyst bed arranged between an inner wall of the cylindrical main body and the shell, through which the first fluid stream passes, producing a second fluid stream containing ammonia, a central pipe arranged between an outer wall of the shell and the catalyst bed and serving to guide a flow direction of the second fluid stream and, an outlet connected to the cylindrical main body, from which the second fluid stream is discharged, and provides a method of manufacturing ammonia using the ammonia synthesis reactor.

## Description

### TECHNICAL FIELD

The present disclosure relates to an ammonia synthesis reactor and a method for manufacturing ammonia using the same.

The present disclosure was derived from research conducted as part of the Energy International Joint Research Program of the Ministry of Trade, Industry and Energy. [Project Number: RS-2023-00303645, Research Project Title: Development of the technology for storing green hydrogen via power-to-ammonia and the optimized transportation model]

### BACKGROUND ART

Ammonia is a fundamental chemical substance that is necessarily used in various industrial fields, including fertilizers, chemical feedstocks, and pharmaceuticals. In particular, its importance has been further highlighted recently due to its emerging potential as a hydrogen carrier and a clean fuel.

Currently, most commercially used ammonia production methods are based on the Haber-Bosch process. The Haber-Bosch process produces ammonia (NH₃) by reacting nitrogen (N₂) and hydrogen (H₂) using an iron-based catalyst under high temperature (400~500°C) and high pressure (150~300 bar) conditions. In the conventional Haber-Bosch process, steam reforming of natural gas is employed to produce and preheat the reactants. This process generates a large amount of carbon dioxide, which leads to an increase in overall carbon emissions associated with ammonia production.

Korean Registered Patent No. 1737235 discloses a technology for burning combustion air and main fuel using one or more types of powdered fuel (such as pulverized coal or petroleum coke) or gas (such as LNG). However, since this approach still introduces fossil fuel-based fuel into a burner, it inevitably results in carbon dioxide emissions.

Further, since the ammonia synthesis reaction is a highly exothermic reaction, inadequate temperature control may cause catalyst degradation and a reduction in conversion efficiency. Therefore, it is crucial to effectively control the reaction temperature in an ammonia synthesis reactor, and the design of a heat exchange system in the interior of the reactor becomes a key factor in achieving this.

European Registered Patent No. 3497059 discloses an ammonia synthesis converter in which catalyst layers are arranged in series. However, since a heat exchanger is fixedly disposed on top of a catalyst bed, there is a limitation in space utilization and the apparatus tends to become larger in size. Further, the heat exchanger positioned between multiple beds has separate gas streams and presents a problem in that, due to its structure involving intermediate cooling of partially converted synthesis gas within the heat exchanger, multiple inlet means and complex piping are required.

Therefore, there is a need to develop an ammonia synthesis reactor and a method for manufacturing ammonia that are capable of reducing carbon dioxide emissions, decreasing the size of the apparatus, and improving energy efficiency.

### DISCLOSURE

### TECHNICAL PROBLEM

The present disclosure was devised in view of the above background, and aims to provide a compact ammonia synthesis reactor by simplifying the design and arrangement of a heat exchanger.

Further, the present disclosure aims to efficiently cool the heat generated by the ammonia synthesis reaction without injecting a separate low-temperature gas or refrigerant into the reactor.

Furthermore, the present disclosure aims to provide a method of manufacturing ammonia without carbon dioxide emissions through the combustion of hydrogen or a mixed gas of hydrogen and ammonia.

### TECHNICAL SOLUTION

One aspect of the present disclosure relates to an ammonia synthesis reactor comprising: a sealed cylindrical main body, an inlet connected to the cylindrical main body, into which a first fluid stream containing hydrogen gas and nitrogen gas is introduced, a shell arranged at a center of the cylindrical main body, a tube bundle accommodated within the shell, an interior of which forms a flow path for the first fluid stream, at least one catalyst bed arranged between an inner wall of the cylindrical main body and the shell, through which the first fluid stream passes, producing a second fluid stream containing ammonia, a central pipe arranged between an outer wall of the shell and the catalyst bed and serving to guide a flow direction of the second fluid stream, and an outlet connected to the cylindrical main body, from which the second fluid stream is discharged, wherein the second fluid stream produced in the catalyst bed is introduced into the shell through the central pipe, and is then discharged through the outlet.

According to one embodiment of the present disclosure may provide an ammonia synthesis reactor further comprising a plurality of baffles configured to divide an interior of the shell into a plurality of zones in a longitudinal direction of the shell, wherein the baffles allow the second fluid stream to flow in a zigzag form within the shell, improving heat exchange efficiency with the first fluid stream passing through the tube bundle.

According to one embodiment of the present disclosure may provide an ammonia synthesis reactor wherein the catalyst bed has a cylindrical shape that coaxially surrounds the shell, wherein the catalyst bed is formed with a plurality of through-holes and is filled with a catalyst, and wherein ammonia is synthesized while the first fluid stream flows toward the shell in a radial flow or axial-radial flow manner in an interior of the catalyst bed.

According to one embodiment of the present disclosure may provide an ammonia synthesis reactor wherein the central pipe is formed with a first through-hole in communication with the catalyst bed and a second through-hole in communication with the shell, and wherein the second fluid stream is introduced into the central pipe through the first through-hole, and is then introduced into the shell through the second through-hole.

According to one embodiment of the present disclosure may provide an ammonia synthesis reactor wherein the tube bundle is formed to provide communication between an upper end and a lower end of the shell, allowing the first fluid stream to move from the lower end to the upper end.

According to one embodiment of the present disclosure may provide an ammonia synthesis reactor wherein heat exchange occurs between the first fluid stream flowing through the tube bundle and the second fluid stream flowing through the shell.

According to one embodiment of the present disclosure may provide an ammonia synthesis reactor further comprising a partition installed vertically in the interior of the shell, wherein the interior of the shell is divided into two semi-cylindrical regions by the partition, and wherein the second fluid stream having passed through the catalyst bed is independently introduced into the regions divided by the partition.

According to one embodiment of the present disclosure may provide an ammonia synthesis reactor wherein the inlet is formed at a bottom of the cylindrical main body, and the outlet is formed at a top of the cylindrical main body, wherein a second through-hole of the central pipe is formed at a lower portion of the central pipe, and wherein the second fluid stream having passed through the catalyst bed flows downward along the central pipe, is then introduced into the shell through the second through-hole, and flows upward along the baffles and the partition.

According to one embodiment of the present disclosure may provide an ammonia synthesis reactor wherein both the inlet and the outlet are formed at a bottom of the cylindrical main body, wherein a second through-hole of the central pipe is formed at an upper portion of the central pipe, and wherein the second fluid stream having passed through the catalyst bed flows upward along the central pipe, is then introduced into the shell through the second through-hole, and flows downward along the baffles and the partition.

Another aspect of the present disclosure relates to a method of manufacturing ammonia using the ammonia synthesis reactor, the method comprising: preheating a hydrogen gas stream and a nitrogen gas stream using a preheater, producing a mixed gas stream containing hydrogen gas and nitrogen gas by supplying the preheated hydrogen gas stream and nitrogen gas stream to a gas mixer, synthesizing ammonia and producing a crude synthesis gas stream containing the ammonia and unreacted hydrogen gas and nitrogen gas by supplying the mixed gas stream to the ammonia synthesis reactor, condensing at least a part of the crude synthesis gas stream using a condenser, and separating liquid ammonia from the crude synthesis gas stream using a gas-liquid separator, and supplying the separated crude synthesis gas stream to the preheater and the gas mixer for recirculation.

According to one embodiment of the present disclosure may provide a method of manufacturing ammonia wherein a mixed gas of hydrogen and air or a mixed gas of hydrogen, ammonia and air is injected as a combustion gas into the preheater, and combustion heat generated by burning the combustion gas is used to preheat the hydrogen gas stream and the nitrogen gas stream.

According to one embodiment of the present disclosure may provide a method of manufacturing ammonia wherein the ammonia injected as the combustion gas is gaseous ammonia recovered from the crude synthesis gas stream separated by the gas-liquid separator.

According to one embodiment of the present disclosure may provide a method of manufacturing ammonia wherein the gas mixer mixes the hydrogen gas stream and nitrogen gas stream preheated by the preheater with the crude synthesis gas stream separated by the gas-liquid separator to produce a mixed gas stream containing hydrogen gas and nitrogen gas in a predetermined molar ratio.

According to one embodiment of the present disclosure may provide a method of manufacturing ammonia wherein the molar ratio of hydrogen gas to nitrogen gas in the mixed gas stream is between 3 and 4.

According to one embodiment of the present disclosure may provide a method of manufacturing ammonia further comprising supplying steam generated by burning the combustion gas to the gas mixer to indirectly heat a mixed gas stream in an interior of the gas mixer.

According to one embodiment of the present disclosure may provide a method of manufacturing ammonia further comprising supplying steam generated by burning the combustion gas to a steam turbine to generate electricity.

According to one embodiment of the present disclosure may provide a method of manufacturing ammonia wherein an internal temperature of the ammonia synthesis reactor is maintained between 400°C and 500°C.

According to one embodiment of the present disclosure may provide a method of manufacturing ammonia wherein a pressure of the ammonia synthesis reactor is maintained between 10 bar and 100 bar.

According to one embodiment of the present disclosure may provide a method of manufacturing ammonia further comprising, in the condenser, condensing at least a part of the crude synthesis gas stream into liquid ammonia using a steam condensate generated by indirectly heating a mixed gas stream in the interior of the gas mixer.

According to one embodiment of the present disclosure may provide a method of manufacturing ammonia further comprising supplying steam generated by condensing at least a part of the crude synthesis gas stream to the gas mixer to indirectly heat the mixed gas stream.

According to one embodiment of the present disclosure may provide a method of manufacturing ammonia further comprising supplying steam generated by condensing at least a part of the crude synthesis gas stream to a steam turbine to generate electricity.

### ADVANTAGEOUS EFFECTS

According to the present disclosure, it is possible to provide a compact ammonia synthesis reactor by simplifying the design and arrangement of a heat exchanger.

Further, it is possible to efficiently cool the heat generated by the ammonia synthesis reaction without injecting a separate low-temperature gas or refrigerant into the reactor.

Furthermore, it is possible to provide a method of manufacturing ammonia without carbon dioxide emissions through the combustion of hydrogen or a mixed gas of hydrogen and ammonia.

### DESCRIPTION OF DRAWINGS

FIG. 1 is a front view of an ammonia synthesis reactor according to one embodiment of the present disclosure.
FIG. 2 is a schematic diagram illustrating the flow of fluid in the interior of a shell and tube bundle in the ammonia synthesis reactor according to the embodiment of the present disclosure.
FIG. 3 is a schematic diagram illustrating the flow of fluid in the interior of one or more catalyst beds in the ammonia synthesis reactor according to the embodiment of the present disclosure.
FIG. 4 is a front view of the ammonia synthesis reactor according to another embodiment of the present disclosure.
FIG. 5 is a schematic diagram illustrating the flow of fluid in the interior of the shell and tube bundle in the ammonia synthesis reactor according to the other embodiment of the present disclosure.
FIG. 6 is a diagram illustrating the overall process of a method of manufacturing ammonia according to the present disclosure.

### MODE FOR INVENTION

Embodiments of the present disclosure are illustrated for the purpose of explaining the technical idea of the present disclosure. The scope of the rights according to the present disclosure is not limited to the embodiments presented below or the detailed descriptions of such embodiments. The technical idea of the present disclosure includes various modifications, equivalents, alternatives, and embodiments selectively combined from all or part of each embodiment of the present disclosure. Further, the scope of the rights of the technical idea of the present disclosure is not limited to the various embodiments presented below or the detailed descriptions thereof.

Terms used in this specification, including technical and scientific terms, may have the meaning generally understood by those of ordinary skill in the art to which this specification pertains, unless otherwise defined.

As used in this specification, expressions such as "comprising", "may comprise", "include", "may include", "has", and "may have" are intended to indicate the presence of specified features (such as functions, operations, or components) and do not exclude the presence of other additional features. That is, such expressions are to be understood as open-ended terms having the possibility of encompassing other embodiments.

The singular form described in this specification may include a plural meaning, unless otherwise mentioned. This applies equally to the singular form recited in the claims.

As used in this specification, expressions such as "first", "second", " primary", and "secondary" are used to distinguish one object from another among multiple similar objects, and do not limit the order or importance of the objects, unless otherwise specified in the context.

An ammonia synthesis reactor 10 according to the present disclosure includes a sealed cylindrical main body 100, an inlet 101 connected to the cylindrical main body 100, into which a first fluid stream F1 containing hydrogen gas and nitrogen gas is introduced, a shell 110 arranged at a center of the cylindrical main body, a tube bundle 120 accommodated within the shell 110, an interior of which forms a flow path for the first fluid stream F1, at least one catalyst bed 130 arranged between an inner wall of the cylindrical main body 100 and the shell 110, through which the first fluid stream F1 passes, producing a second fluid stream F2 containing ammonia, a central pipe 111 arranged between an outer wall of the shell 110 and the catalyst bed 130 and serving to guide a flow direction of the second fluid stream F2, and an outlet 102 connected to the cylindrical main body 100, from which the second fluid stream F2 is discharged.

The cylindrical main body 100 serves to stably support and protect internal components under high-pressure and high-temperature reaction conditions. For example, to prevent deformation or damage even under high-pressure and high-temperature conditions, it may be manufactured from materials with excellent pressure resistance, heat resistance, and corrosion resistance, such as chromium-molybdenum alloy steel or stainless steel.

The inlet 101 is connected to the cylindrical main body 100 and provides a passage through which the first fluid stream F1 containing hydrogen gas and nitrogen gas is introduced into the interior of the ammonia synthesis reactor 10. The inlet 101 is in communication with one end of the tube bundle 120, allowing the first fluid stream F1 to be introduced into the interior of the tube bundle 120.

The central pipe 111 is arranged between the outer wall of the shell 110 and the catalyst bed 130, and guides the flow direction of the second fluid stream F2. The central pipe 111 includes a first through-hole 112 in communication with the catalyst bed 130 and a second through-hole 113 in communication with the shell 110, and the second fluid stream may flow sequentially through these through-holes. Specifically, the second fluid stream F2 that has passed through the catalyst bed 130 may be introduced into the interior of the central pipe 111 through the first through-hole 112 in the central pipe, may then flow upward or downward along an inner wall of the central pipe 111, and may be introduced into the interior of the shell 110 through the second through-hole 113 in the central pipe.

The shell 110 is arranged at the center of the cylindrical main body 100 and serves to accommodate the tube bundle 120 and guide the flow of fluid. Specifically, the shell 110 is a cylindrical structure that is coaxially arranged with the cylindrical main body 100, and forms a fluid flow space while stably supporting the tube bundle 120 in the interior thereof. The shell 110 provides independent paths for the first fluid stream F1 and the second fluid stream F2, thereby enabling effective heat exchange without mixing a high-temperature reaction product with a low-temperature reactant.

The tube bundle 120 is accommodated in the interior of the shell 110 and forms a flow path for the first fluid stream F1 containing hydrogen gas and nitrogen gas. The tube bundle 120 may have a structure in which a plurality of vertical tubes are arranged in a circular shape. For example, when viewed in a cross-sectional plane, the vertical tubes may be arranged in concentric circles. The tube bundle 120 is formed to provide communication between the upper and lower ends of the shell 110, allowing the first fluid stream F1 to move from the lower end to the upper end. For example, the tubes may be arranged in a circular shape at regular intervals, thereby forming a flow path through which the first fluid stream F1 may be uniformly distributed and rise from the lower end to the upper end. This circular bundle structure allows for the effective utilization of the internal space of the shell 110 while maximizing the contact area with the second fluid stream F2 flowing along the shell 110 side, thereby enhancing the efficiency of heat exchange between the first fluid stream F1 and the second fluid stream F2. The combination of the shell 110 and the tube bundle 120 forms a shell-and-tube heat exchanger structure, enabling efficient heat exchange between two fluid streams at different temperatures. The first fluid stream F1 discharged through an exit at the upper end of the tube bundle 120 is introduced into an upper portion of a catalyst reaction zone where the catalyst bed 130 is arranged.

The catalyst bed 130 is arranged between the inner wall of the cylindrical main body 100 and the shell 110, and forms a main reaction zone where the ammonia synthesis reaction occurs as the first fluid stream F1 passes therethrough. The catalyst bed 130 may have a cylindrical shape that coaxially surrounds the shell 110. The interior of the catalyst bed 130 is filled with a catalyst, which may include an iron-based catalyst, a ruthenium-based catalyst, or a cobalt-molybdenum-based catalyst. A plurality of through-holes 134 are formed in an outer wall of the catalyst bed 130. This allows the first fluid stream F1 containing hydrogen gas and nitrogen gas to be introduced into the catalyst bed 130 from the tube bundle 120. Ammonia is synthesized as the first fluid stream F1 flows in a radial flow or axial-radial flow manner toward the shell 110 in the interior of the catalyst bed 130. Here, the "radial flow" refers to the flow of the fluid stream in a direction perpendicular to the central axis of the reactor, while the "axial-radial flow" refers to the flow that has both an axial component along the longitudinal direction of the reactor and a radial component perpendicular to the central axis of the reactor. This radial flow or axial-radial flow allows the fluid stream to pass evenly through catalyst layers, thereby minimizing the pressure drop in the interior of the catalyst bed and enhancing catalyst efficiency through uniform gas distribution and temperature distribution, which ultimately enables stable ammonia synthesis at a consistent yield. In particular, the radial flow may significantly reduce the pressure drop compared to the axial flow. The "pressure drop" refers to the pressure difference that occurs between an entrance and an exit as the fluid stream passes through the catalyst bed 130, and is caused by the resistance encountered by the fluid stream passing through the catalyst bed 130. A lower pressure drop improves the uniformity of flow within the catalyst bed 130, thereby enhancing reaction efficiency. Further, uniform temperature distribution helps prevent the formation of hot spots, contributing to improved reaction stability. Furthermore, it may reduce the energy consumption of a gas compressor used to supply the fluid stream to the ammonia synthesis reactor 10. Although both the radial flow and the axial-radial flow may be present in the interior of the catalyst bed 130, the radial flow may be more effective in reducing the pressure drop.

The catalyst bed 130 according to one embodiment of the present disclosure may include a first catalyst bed 131, a second catalyst bed 132, and a third catalyst bed 133. Catalyst bed sheets may be installed between the inner wall of the cylindrical main body 100 and the shell 110 to divide the catalyst reaction zone along the longitudinal direction of the shell 110 and to maintain a uniform temperature gradient within the reactor. The catalyst beds 131, 132 and 133 may be arranged in respective catalyst reaction zones. Through-holes 135 may be formed in the catalyst bed sheets to allow communication between the respective catalyst reaction zones, thereby enabling the first fluid stream F1 to be introduced in parallel into the respective catalyst reaction zones. In other words, the first fluid stream F1 may be simultaneously and independently introduced into the respective catalyst reaction zones. In other words, the first fluid stream F1 from the tube bundle 120 may be introduced into the catalyst reaction zone where the first catalyst bed 131 is arranged, and then a part of the first fluid stream may be introduced into the catalyst reaction zone where the second catalyst bed 132 is arranged through the through-hole 135 formed in the catalyst bed sheet supporting the first catalyst bed 131. Thereafter, a part of the first fluid stream F1 introduced into the catalyst reaction zone where the second catalyst bed 132 is arranged may again be introduced into the catalyst reaction zone where the third catalyst bed 133 is arranged through the through-hole 135 formed in the catalyst bed sheet supporting the second catalyst bed 132. As such, the first fluid stream F1 causes a catalyst reaction while passing through each of the catalyst beds 131, 132 and 133. The first fluid stream F1 is synthesized into ammonia while flowing toward the shell 110 in a radial flow or axial-radial flow manner through the catalyst beds 131, 132 and 133 within the respective catalyst reaction zones. The second fluid stream F2 containing the synthesized ammonia may be introduced into the interior of the central pipe 111 through the first through-hole 112 in the central pipe, which is in communication with the catalyst bed 130, and may be then introduced into the shell 110 through the second through-hole 113 in the central pipe, which is in communication with the shell 110. In this specification, the description is based on an embodiment having three catalyst beds, but the disclosure is not limited thereto. The catalyst bed according to one embodiment may include one or more catalyst beds.

The outlet 102 is connected to the cylindrical main body 100 and provides a passage through which the second fluid stream F2 containing ammonia is discharged to the outside of the ammonia synthesis reactor 10. The outlet 102 is in communication with one end of the shell 110, allowing the second fluid stream F2 that has completed heat exchange in the interior of the shell 110 to be smoothly discharged to the outside.

The interior of the shell 110 is divided into two independent semi-cylindrical regions by a vertically installed partition 150. The partition 150 is installed at a central portion of the shell 110, allowing the second fluid stream F2 to be independently introduced into both sides of the interior of the shell 110. This structure of the partition 150 prevents the mixed flow and asymmetric flow of fluid that may occur at the central portion of the shell 110. The partition 150 is formed to extend along the longitudinal direction of the shell 110, and prevents the formation of a dead zone, which is a region where the fluid stagnates or hardly flows, by allowing the second fluid stream F2 to be uniformly distributed and flow through each region. Further, the partition 150 has the effect of reducing vortex formation, thereby minimizing the pressure drop. This improves the thermal flow of the second fluid stream F2 and enhances overall heat exchange efficiency.

A plurality of baffles 140 may be included in the interior of the shell 110. The baffles 140 are structures that divide the interior of the shell 110 into a plurality of zones in the longitudinal direction of the shell 110, and serve to guide the flow direction of the second fluid stream F2 flowing in the interior of the shell. Each baffle 140 is formed to extend inward from the inner wall of the shell 110 and from the partition 150 by a predetermined length, and is installed on both sides on the basis of the central partition 150. The baffles 140 are installed alternately at regular intervals along the longitudinal direction of the shell 110, thereby forming a flow path through which the second fluid stream F2 may pass. With this structure, the second fluid stream F2 creates a zigzag flow as it moves from one baffle to the next baffle. Although the embodiment described in this specification is based on an example in which the baffles 140 are alternately installed at regular intervals along the longitudinal direction of the shell 110, but the disclosure is not limited thereto. According to one embodiment, each baffle 140 may have a semicircular plate shape corresponding to the internal shape of the cylindrical shell 110 on both sides on the basis of the central partition 150, and may be implemented in various other shapes. For example, one baffle 140 may be formed with a circular through-hole at a position adjacent to the central axis of the shell 110 and the partition 150, and the next downstream baffle 140 may be formed with a through-hole at a position spaced apart from the partition 150 and adjacent to the inner wall of the shell 110, thereby allowing the second fluid stream F2 to flow in a zigzag form. In another example, one baffle 140 may be formed with an additional wall that extends in a direction parallel to the partition 150, and the upstream and downstream baffles 140 on opposite sides of this additional wall may be formed with circular through-holes, thereby allowing the second fluid stream F2 to flow around the additional wall in a helical flow manner, rather than flowing directly from the through-hole formed in the upstream baffle 140 to the through-hole formed in the downstream baffle 140. These various configurations of the baffle 140 serve to lengthen the flow path of the second fluid stream F2 and increase the residence time of fluid, thereby enabling more effective heat exchange with the first fluid stream F1. In particular, in the case of a helical flow, the fluid rotates as it moves through the interior of the shell 110, which may further improve heat exchange efficiency.

Hereinafter, the present disclosure will be described with reference to the drawings.

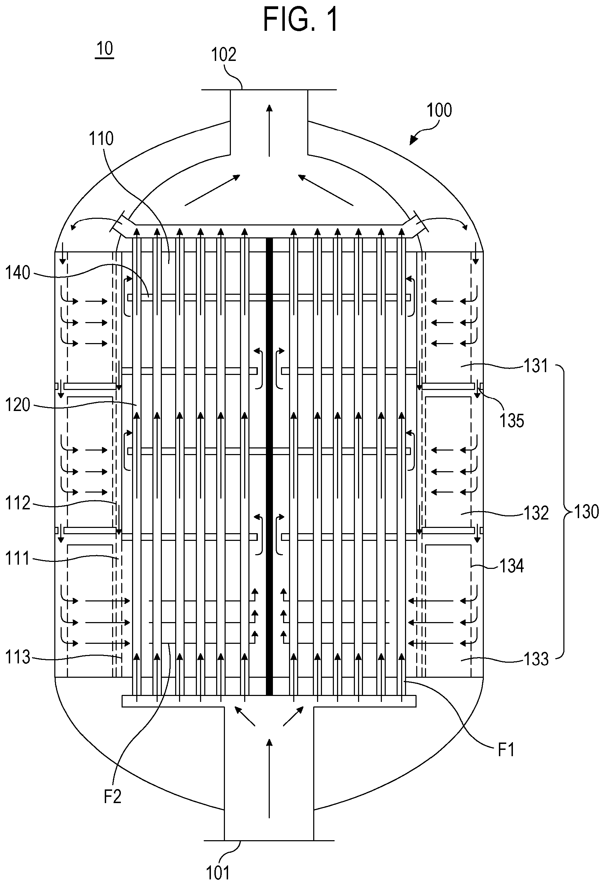

FIG. 1 is a front view of the ammonia synthesis reactor 10 according to one embodiment of the present disclosure. According to one embodiment of the present disclosure, the first fluid stream F1 containing hydrogen gas and nitrogen gas may be supplied through the inlet 101 formed at the bottom of the cylindrical main body 100. The first fluid stream F1 passes through the tube bundle 120 accommodated within the shell 110 and reaches an upper portion of the cylindrical main body 100. The first fluid stream F1 that has reached the upper portion of the cylindrical main body 100 is distributed in parallel to the respective catalyst reaction zones where the first catalyst bed 131, the second catalyst bed 132, and the third catalyst bed 133 are arranged respectively, through the through-holes 135 of the catalyst bed sheets. The first fluid stream F1 that has passed through the through-hole 134 of each catalyst bed is synthesized into ammonia while flowing in a radial flow or axial-radial flow manner toward the shell 110 in the interior of the catalyst bed 130. At this time, since the ammonia synthesis reaction is an exothermic reaction, the temperature of the second fluid stream F2 containing the synthesized ammonia and unreacted gases rises compared to the temperature of the first fluid stream F1. The high-temperature second fluid stream F2 is introduced to the interior of the central pipe 111 through the first through-hole 112 in the central pipe, which is in communication with the catalyst bed 130. According to one embodiment of the present disclosure, the central pipe 111 is formed with the second through-hole 113 formed at a lower portion of the central pipe 111, which is in communication with the shell 110. Accordingly, the second fluid stream F2 that has passed through each catalyst bed 130 flows downward along the inner wall of the central pipe 111, and is then introduced into the interior of the shell 110 through the second through-hole 113 located at the lower portion. At this time, the second fluid stream F2 is independently introduced into both sides due to the partition 150, which divides the interior of the shell 110 into two semi-cylindrical regions. The high-temperature second fluid stream F2 introduced into the interior of the shell 110 flows upward in a zigzag form by the baffles 140, and is cooled through co-current indirect heat exchange with the low-temperature first fluid stream F1 flowing upward within the tube bundle 120. The "co-current heat exchange" refers to a method in which two fluid streams exchange heat while flowing in the same direction. The temperature difference between the two fluid streams is the greatest in a lower region where the inlet 101 is located, so that heat exchange efficiency is maximized. As the streams flow toward an upper region where the outlet 102 is located, the temperature difference between the two fluid streams gradually decreases, resulting in a reduction in heat exchange efficiency. According to such co-current indirect heat exchange, a reactant gas may be supplied to the catalyst bed at a relatively constant temperature since less heat exchange occurs in the upper region. This allows the internal temperature gradient in the interior of the reactor to be kept moderate, thereby improving temperature uniformity. The second fluid stream F2 that has been cooled through the co-current indirect heat exchange is discharged through the outlet 102 formed at the top of the cylindrical main body 100.

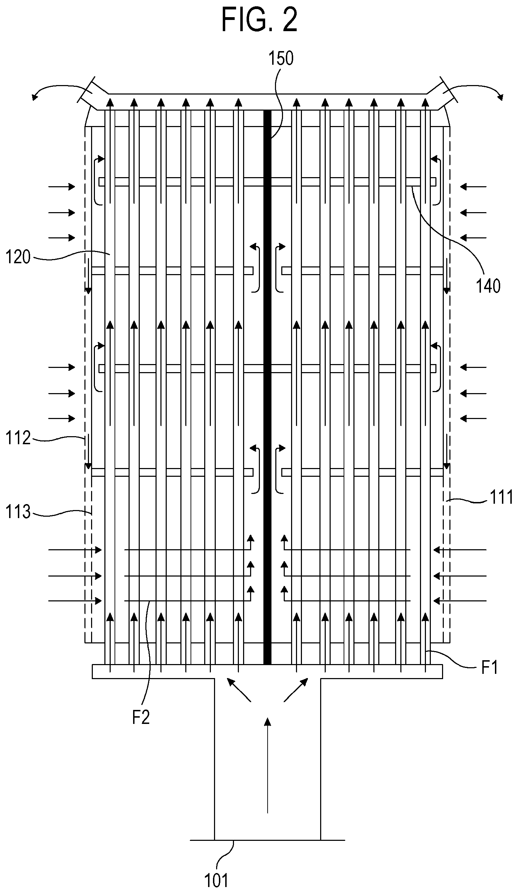

FIG. 2 is a schematic diagram illustrating the flow of fluid in the interior of the shell and tube bundle in the ammonia synthesis reactor according to the embodiment of the present disclosure.

Referring to FIG. 2, the first fluid stream F1 containing hydrogen gas and nitrogen gas is introduced through the inlet 101 formed at the bottom of the cylindrical main body 100, and then flows vertically upward from the lower end to the upper end through the interior of the tube bundle 120. The second fluid stream F2 containing ammonia synthesized in the catalyst bed 130 is introduced into the interior of the central pipe 111 through the first through-hole 112 in the central pipe, which is in communication with the catalyst bed 130, flows downward along the inner wall of the central pipe 111, and is then introduced into the interior of the shell 110 through the second through-hole 113 located at the lower portion. At this time, the second fluid stream F2 is independently introduced into both sides due to the partition 150, which divides the interior of the shell 110 into two semi-cylindrical regions. The high-temperature second fluid stream F2 introduced into the interior of the shell 110 is guided to flow in a zigzag form by the baffles 140, and undergoes co-current indirect heat exchange with the relatively low-temperature first fluid stream F1 passing through the interior of the tube bundle 120. During this heat exchange process, the high-temperature second fluid stream F2 is cooled, while the first fluid stream F1 passing through the tube bundle 120 is simultaneously heated. The zigzag flow formed by the baffles 140 increases the residence time of the second fluid stream F2, and enhances the contact area with the tube bundle 120. This improves heat exchange efficiency between the first fluid stream F1 and the second fluid stream F2, which in turn contributes to an improvement in the overall energy efficiency of the process.

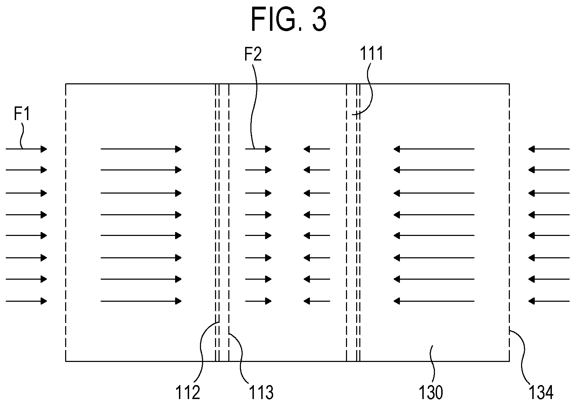

FIG. 3 is a schematic diagram illustrating the flow of fluid in the interior of one or more catalyst beds in the ammonia synthesis reactor according to the embodiment of the present disclosure.

Referring to FIG. 3, the first fluid stream F1 is synthesized into ammonia while passing through the catalyst bed 130 in a radial flow or axial-radial flow manner. Here, the "radial flow" refers to the flow of fluid stream in a direction perpendicular to the central axis of the reactor, as illustrated by the arrows in FIG. 3. The "axial-radial flow" (not illustrated) refers to the flow of fluid stream flowing in the axial direction, which is the longitudinal direction of the reactor, within the catalyst bed 130, while simultaneously flowing radially toward the shell 110 in a direction perpendicular to the central axis of the reactor. The second fluid stream F2 containing the synthesized ammonia is introduced into the interior of the central pipe 111 through the first through-hole 112 in the central pipe, which is in communication with the catalyst bed 130, and is then introduced into the interior of the shell 110 through the second through-hole 113 in the central pipe, which is in communication with the shell 110.

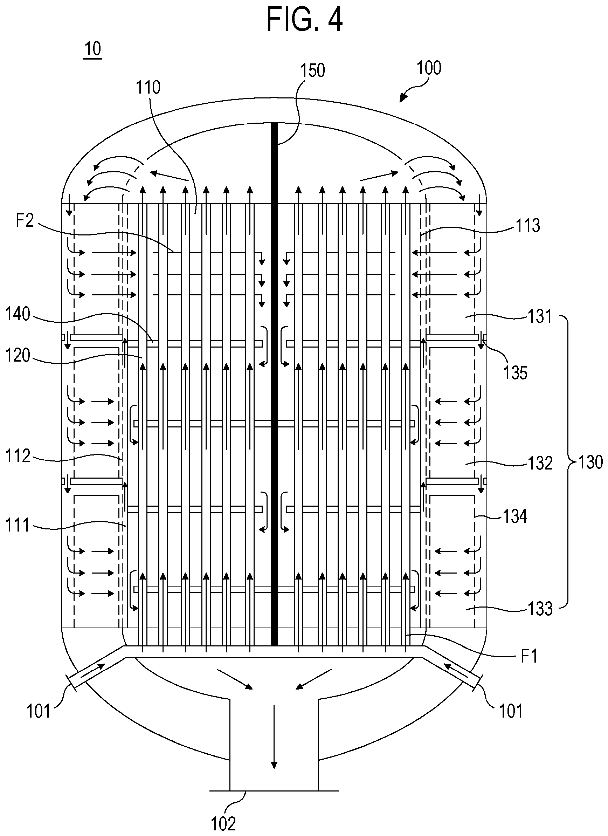

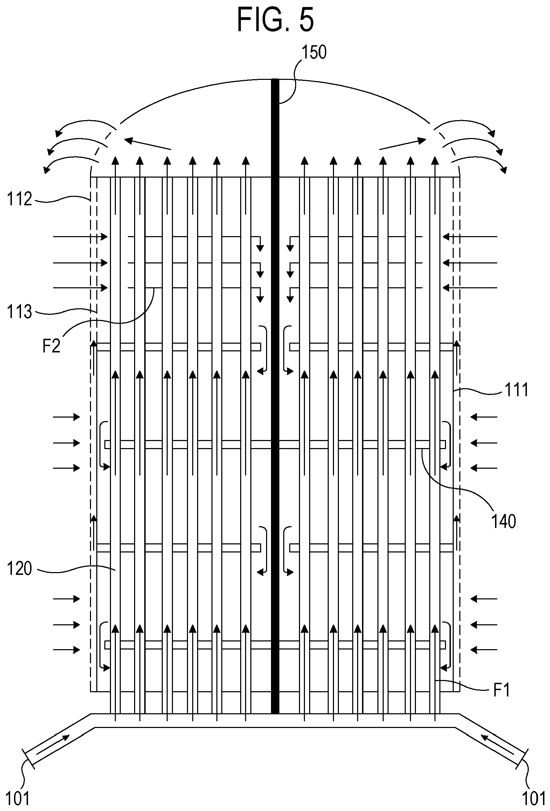

FIG. 4 is a front view of the ammonia synthesis reactor according to another embodiment of the present disclosure. FIG. 5 is a schematic diagram illustrating the flow of fluid flowing through the interior of the shell and tube bundle in the ammonia synthesis reactor according to the other embodiment of the present disclosure.

Referring to FIGS. 4 and 5, both the inlet 101 and the outlet 102 of the ammonia synthesis reactor 10 according to the other embodiment of the present disclosure are formed at the bottom of the cylindrical main body 100. The first fluid stream F1 supplied through the inlet 101 at the bottom passes through the tube bundle 120 accommodated within the shell 110 and reaches an upper portion of the cylindrical main body 100. The first fluid stream F1 that has reached the upper portion of the cylindrical main body 100 is distributed in parallel to the respective catalyst reaction zones, where the first catalyst bed 131, the second catalyst bed 132, and the third catalyst bed 133 are arranged respectively, through the through-holes 135 of the catalyst bed sheets. The first fluid stream F1 that has passed through the through-hole 134 of each catalyst bed is synthesized into ammonia while flowing toward the shell 110 in the interior of the catalyst bed 130 in a radial flow or axial-radial flow manner. The high-temperature second fluid stream F2 is introduced to the interior of the central pipe 111 through the first through-hole 112 in the central pipe, which is in communication with the catalyst bed 130. According to the other embodiment of the present disclosure, the central pipe 111 has the second through-hole 113 formed at an upper portion of the central pipe 111, which is in communication with the shell 110. Accordingly, the second fluid stream F2 that has passed through each catalyst bed 130 flows upward along the inner wall of the central pipe 111, and is then introduced into the interior of the shell 110 through the second through-hole 113 located at the upper portion. At this time, the second fluid stream F2 is independently introduced into both sides due to the partition 150, which divides the interior of the shell 110 into two semi-cylindrical regions. The high-temperature second fluid stream F2 introduced into the interior of the shell 110 flows downward in a zigzag form by the baffles 140, and is cooled through counter-current indirect heat exchange with the low-temperature first fluid stream F1 flowing upward within the tube bundle 120. The "counter-current heat exchange" refers to a method in which two fluid streams exchange heat while flowing in opposite directions. Since the temperature difference between the fluid streams remains relatively constant in both lower and upper regions, this method has the advantage of higher overall heat exchange efficiency compared to the co-current heat exchange method. Further, the counter-current indirect heat exchange method allows the second fluid stream F2 to be cooled to a lower temperature due to high heat exchange efficiency thereof, thereby reducing the load on a condenser 40 in the subsequent condensation step. This may contribute to improved energy efficiency and reduced operational costs in the subsequent processes. Furthermore, this method is advantageous for designing large-scale reactors since it minimizes deterioration in heat exchange performance even when the size of the ammonia synthesis reactor 10 increases. The second fluid stream F2 that has been cooled through the counter-current indirect heat exchange is discharged through the outlet 102 formed at the bottom of the cylindrical main body 100.

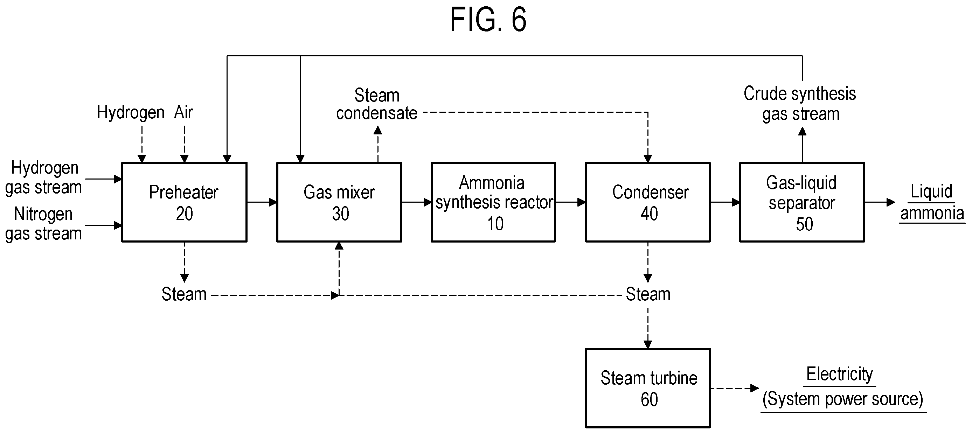

FIG. 6 is a diagram illustrating the overall process of a method of manufacturing ammonia according to the present disclosure.

Referring to FIG. 6, the method of manufacturing ammonia according to the present disclosure includes the following steps.

First, the method includes a step of preheating a hydrogen gas stream and a nitrogen gas stream by supplying them to a preheater 20. A combustion gas is injected into the preheater 20. The combustion gas may be a mixed gas of hydrogen and air, or a mixed gas of hydrogen, ammonia, and air. In the preheater 20, combustion heat generated by burning the combustion gas is used to preheat the hydrogen gas stream and the nitrogen gas stream. At this time, the ammonia injected as the combustion gas may be gaseous ammonia and unreacted hydrogen recovered from a crude synthesis gas stream separated by a gas-liquid separator 50, which will be described later. Additionally, steam generated by burning the combustion gas may be supplied to a gas mixer 30 and used to indirectly heat a mixed gas stream in the interior of the gas mixer 30. The preheater 20 according to the present disclosure uses a mixed gas of hydrogen and air or a mixed gas of hydrogen, ammonia, and air as the combustion gas, thereby enabling carbon-free heating without carbon dioxide emissions, unlike conventional preheating methods using fossil fuels. Further, the economic efficiency of the process may be improved by recycling the gaseous ammonia recovered from the gas-liquid separator 50 as the combustion gas.

Next, the method includes a step of producing a mixed gas stream containing hydrogen gas and nitrogen gas by supplying the hydrogen gas stream and the nitrogen gas stream preheated in the preheater 20 to the gas mixer 30. In the gas mixer 30, the preheated hydrogen gas stream and nitrogen gas stream are mixed with the crude synthesis gas stream separated by the gas-liquid separator 50, which will be described later, to produce a mixed gas stream having a predetermined molar ratio. At this time, the molar ratio of hydrogen gas to nitrogen gas in the mixed gas stream is maintained between 3 and 4, which takes into account the stoichiometric ratio of the ammonia synthesis reaction. In general, the ammonia synthesis reaction follows the equation N₂ + 3H₂ → 2NH₃, and thus the theoretical molar ratio of hydrogen gas and nitrogen gas is 3. However, in actual processes, it is desirable to supply hydrogen in excess to shift the equilibrium of the reaction and improve the conversion rate. In one embodiment of the present disclosure, the method may further include supplying steam generated by burning the combustion gas in the preheater 20 to the gas mixer 30 to indirectly heat the mixed gas stream. Further, the method may further include a step of supplying steam generated by burning the combustion gas in the preheater 20 to a steam turbine 60 to generate electricity. This allows heat energy generated during the combustion process to be effectively utilized, thereby improving the overall energy efficiency of the process.

Next, the method includes a step of synthesizing ammonia and producing a crude synthesis gas stream containing the synthesized ammonia and unreacted hydrogen gas and nitrogen gas by supplying the mixed gas stream to the ammonia synthesis reactor 10. The interior of the ammonia synthesis reactor 10 is maintained at a temperature between 400°C and 500°C and a pressure between 10 bar and 100 bar. These temperature and pressure conditions are optimized in consideration of the reaction rate of the ammonia synthesis reaction and the heat exchange efficiency in the interior of the reactor. If the internal temperature and pressure fall below the lower limits, the reaction rate and yield of ammonia synthesis are significantly reduced. Conversely, if the internal temperature and pressure exceed the upper limits, an increase in internal exothermic temperature leads to a decrease in heat exchange efficiency, which may cause catalyst deactivation, and an increase in internal temperature difference may degrade reaction efficiency. In the ammonia synthesis reactor 10, ammonia is synthesized from the mixed gas stream, thereby producing a crude synthesis gas stream containing ammonia and unreacted hydrogen gas and nitrogen gas. In the method of manufacturing ammonia according to the present disclosure, by using the ammonia synthesis reactor 10 described above, it is possible to equalize the temperature and flow distribution through a radial flow or axial-radial flow in the catalyst bed and to effectively remove reaction heat through the shell-and-tube type heat exchanger structure while utilizing the reaction heat for preheating reactants. Further, this method has the advantage of enabling a compact overall design since heat exchange is possible within the reactor itself without the need for a separate external heat exchanger.

Next, the method includes a step of condensing at least a part of the crude synthesis gas stream into liquid ammonia using the condenser 40. In the condenser 40, a part of the crude synthesis gas stream is condensed using a steam condensate generated by indirectly heating the mixed gas stream in the interior of the gas mixer 30. At this time, steam generated by condensing at least a part of the crude synthesis gas stream may be supplied to the gas mixer 30 and used to indirectly heat the mixed gas stream, or may be supplied to the steam turbine 60 and used to generate electricity.

Next, the method includes a step of separating liquid ammonia from the crude synthesis gas stream using the gas-liquid separator 50, and supplying the separated crude synthesis gas stream to the preheater 20 or the gas mixer 30 for recirculation. The crude synthesis gas stream separated by the gas-liquid separator 50 is supplied to the gas mixer 30 for recirculation. Further, the gaseous ammonia recovered from the crude synthesis gas stream separated by the gas-liquid separator 50 may be injected as the combustion gas into the preheater 20. This recirculation process has the effect of improving the overall yield of the process by reusing unreacted gases.

The method of manufacturing ammonia according to the present disclosure has the following characteristic effects. Firstly, it is possible to provide a method of manufacturing ammonia that does not emit carbon dioxide through the combustion of hydrogen or a mixed gas of hydrogen and ammonia in the preheater 20. Secondly, it is possible to provide the compact ammonia synthesis reactor 10 capable of maximizing energy efficiency by performing indirect heat exchange between the high-temperature second fluid stream F2 and the low-temperature first fluid stream F1 in a co-current or counter-current manner in the interior of the shell 110 of the ammonia synthesis reactor 10. Thirdly, it is possible to utilize the steam generated in the preheater 20 or the condenser 40 for heating the gas mixer 30 or for generating electricity in the steam turbine 60 and to supply the crude synthesis gas stream separated by the gas-liquid separator 50 to the preheater 20 or the gas mixer 30 for recirculation, thereby improving energy efficiency and economic feasibility of the process.

The embodiments of the present disclosure have been described heretofore with reference to the accompanying drawings. However, it can be understood by those of ordinary skill in the art to which the present disclosure pertains that the present disclosure may be implemented in other specific forms without departing from the technical idea and essential characteristics thereof.

Therefore, it should be understood that the embodiments described above are illustrative and are not restrictive in all respects. The scope of the present disclosure is defined not by the detailed description above but by the claims, and all changes or modifications derived from the meaning and scope of the claims and their equivalents should be interpreted as falling within the scope of the present disclosure.

## Claims

1. An ammonia synthesis reactor comprising:
a sealed cylindrical main body;
an inlet connected to the cylindrical main body, into which a first fluid stream containing hydrogen gas and nitrogen gas is introduced;
a shell arranged at a center of the cylindrical main body;
a tube bundle accommodated within the shell, an interior of which forms a flow path for the first fluid stream;
at least one catalyst bed arranged between an inner wall of the cylindrical main body and the shell, through which the first fluid stream passes, producing a second fluid stream containing ammonia;
a central pipe arranged between an outer wall of the shell and the catalyst bed and serving to guide a flow direction of the second fluid stream; and
an outlet connected to the cylindrical main body, from which the second fluid stream is discharged,
wherein the second fluid stream produced in the catalyst bed is introduced into the shell through the central pipe, and is then discharged through the outlet.

2. The ammonia synthesis reactor of Claim 1, further comprising a plurality of baffles configured to divide an interior of the shell into a plurality of zones in a longitudinal direction of the shell,
wherein the baffles allow the second fluid stream to flow in a zigzag form within the shell, improving heat exchange efficiency with the first fluid stream passing through the tube bundle.

3. The ammonia synthesis reactor of Claim 1 or 2, wherein the catalyst bed has a cylindrical shape that coaxially surrounds the shell,
wherein the catalyst bed is formed with a plurality of through-holes and is filled with a catalyst, and
wherein ammonia is synthesized while the first fluid stream flows toward the shell in a radial flow or axial-radial flow manner in an interior of the catalyst bed.

4. The ammonia synthesis reactor of Claim 1 or 2, wherein the central pipe is formed with a first through-hole in communication with the catalyst bed and a second through-hole in communication with the shell, and
wherein the second fluid stream is introduced into the central pipe through the first through-hole, and is then introduced into the shell through the second through-hole.

5. The ammonia synthesis reactor of Claim 1 or 2, wherein the tube bundle is formed to provide communication between an upper end and a lower end of the shell, allowing the first fluid stream to move from the lower end to the upper end.

6. The ammonia synthesis reactor of Claim 1 or 2, wherein heat exchange occurs between the first fluid stream flowing through the tube bundle and the second fluid stream flowing through the shell.

7. The ammonia synthesis reactor of Claim 1 or 2, further comprising a partition installed vertically in the interior of the shell,
wherein the interior of the shell is divided into two semi-cylindrical regions by the partition, and
wherein the second fluid stream having passed through the catalyst bed is independently introduced into the regions divided by the partition.

8. The ammonia synthesis reactor of Claim 7, wherein the inlet is formed at a bottom of the cylindrical main body, and the outlet is formed at a top of the cylindrical main body,
wherein a second through-hole of the central pipe is formed at a lower portion of the central pipe, and
wherein the second fluid stream having passed through the catalyst bed flows downward along the central pipe, is then introduced into the shell through the second through-hole, and flows upward along the baffles and the partition.

9. The ammonia synthesis reactor of Claim 7, wherein both the inlet and the outlet are formed at a bottom of the cylindrical main body,
wherein a second through-hole of the central pipe is formed at an upper portion of the central pipe, and
wherein the second fluid stream having passed through the catalyst bed flows upward along the central pipe, is then introduced into the shell through the second through-hole, and flows downward along the baffles and the partition.

10. A method of manufacturing ammonia using the ammonia synthesis reactor of Claim 1, the method comprising:
preheating a hydrogen gas stream and a nitrogen gas stream using a preheater;
producing a mixed gas stream containing hydrogen gas and nitrogen gas by supplying the preheated hydrogen gas stream and nitrogen gas stream to a gas mixer;
synthesizing ammonia and producing a crude synthesis gas stream containing the ammonia and unreacted hydrogen gas and nitrogen gas by supplying the mixed gas stream to the ammonia synthesis reactor;
condensing at least a part of the crude synthesis gas stream using a condenser; and
separating liquid ammonia from the crude synthesis gas stream using a gas-liquid separator, and supplying the separated crude synthesis gas stream to the preheater and the gas mixer for recirculation.

11. The method of Claim 10, wherein a mixed gas of hydrogen and air or a mixed gas of hydrogen, ammonia and air is injected as a combustion gas into the preheater, and combustion heat generated by burning the combustion gas is used to preheat the hydrogen gas stream and the nitrogen gas stream.

12. The method of Claim 11, wherein the ammonia injected as the combustion gas is gaseous ammonia recovered from the crude synthesis gas stream separated by the gas-liquid separator.

13. The method of Claim 10 or 11, wherein the gas mixer mixes the hydrogen gas stream and nitrogen gas stream preheated by the preheater with the crude synthesis gas stream separated by the gas-liquid separator to produce a mixed gas stream containing hydrogen gas and nitrogen gas in a predetermined molar ratio.

14. The method of Claim 13, wherein the molar ratio of hydrogen gas to nitrogen gas in the mixed gas stream is between 3 and 4.

15. The method of Claim 11, further comprising supplying steam generated by burning the combustion gas to the gas mixer to indirectly heat a mixed gas stream in an interior of the gas mixer.

16. The method of Claim 11, further comprising supplying steam generated by burning the combustion gas to a steam turbine to generate electricity.

17. The method of Claim 10 or 11, wherein an internal temperature of the ammonia synthesis reactor is maintained between 400°C and 500°C.

18. The method of Claim 10 or 11, wherein a pressure of the ammonia synthesis reactor is maintained between 10 bar and 100 bar.

19. The method of Claim 10 or 11, further comprising, in the condenser, condensing at least a part of the crude synthesis gas stream into liquid ammonia using a steam condensate generated by indirectly heating a mixed gas stream in the interior of the gas mixer.

20. The method of Claim 19, further comprising supplying steam generated by condensing at least a part of the crude synthesis gas stream to the gas mixer to indirectly heat the mixed gas stream.

21. The method of Claim 19, further comprising supplying steam generated by condensing at least a part of the crude synthesis gas stream to a steam turbine to generate electricity.
